Europäisches Patentamt

European Patent Office

Office européen des brevets

(19)

(11) Publication number: **0 090 889**

A1

# EUROPEAN PATENT APPLICATION

(21) Application number: **82301722.3**

(22) Date of filing: **01.04.82**

(51) Int. Cl.³: **B 29 H 3/06**

(43) Date of publication of application:
**12.10.83 Bulletin 83/41**

(84) Designated Contracting States:
**AT BE CH DE FR GB IT LI LU NL SE**

(71) Applicant: AIR PRODUCTS AND CHEMICALS, INC.
P.O. Box 538
Allentown, Pennsylvania 18105(US)

(72) Inventor: Heeren, Willi
Planckstrasse 11
D-4600 Dortmund 18(DE)

(72) Inventor: Geyer, Volker
Kantstrasse 10
D-4020, Mettmann(DE)

(72) Inventor: Graeber, Wolf Dieter
Ubertzweg 26
D-4005, Meerbusch-Struemp(DE)

(72) Inventor: Schwencke, Holger
Schlickumer Weg 32
D-4006, Erkrath 2(DE)

(74) Representative: Lucas, Brian Ronald
c/o Air Products Limited Hersham Place Molesey Road
Walton-on-Thames Surrey, KT12 4RZ(GB)

(54) Apparatus for removing flash from mouldings.

(57) An apparatus for removing flash from mouldings comprises a spray bar (5) for injecting liquid nitrogen onto rubber mouldings to embrittle the flash on the mouldings. The mouldings are then carried between a pair of rotating brushes (12, 13) by a pair of conveyors (6, 7) each of which comprises a plurality of endless loops of wire which are spaced apart from one another to permit the bristles of the brushes (12, 13) to act on the mouldings.

0090889

223-P- -

## APPARATUS FOR REMOVING FLASH FROM MOULDINGS

This invention relates to an apparatus for removing flash from mouldings and, more particularly but not exclusively, is concerned with an apparatus for removing flash from plastic mouldings which are used to secure windows in automobiles.

Plastic mouldings which are used to secure windows in automobiles are generally of complex configuration and, until the present time, the removal of flash from such plastic mouldings has been achieved manually using a very sharp trimming knife.

It is known that flash can be removed from less complex plastic mouldings by cooling the plastic mouldings until the flash is embrittled. The embrittled flash can then simply be removed by tumbling the plastic mouldings in a rotating drum or exposing them to a blast of fine shot. Unfortunately neither of these techniques is applicable to the present problem. In particular, in the former case much of the embrittled flash is surrounded by parts of the moulding which prevent the flash being detached from the moulding during tumbling. In the latter case all the embrittled flash is removed but the fine shot becomes trapped inside the moulding. The shot can only be removed manually which is more time consuming than the manual removal of flash itself! Another machine in use at the present time cools plastic mouldings and tumbles them in a rotating drum in which are mounted three rotating brushes. Whilst such rotating brushes penetrate deep into small complex mouldings and remove embrittled flash from the interiors thereof the machine is unsuitable for handling large flexible plastic mouldings which become entangled in the brushes and become stretched and torn.

The present invention seeks to utilise the embrittling of plastics mouldings by cold and the penetrating power of rotating brushes in a manner which will not materially damage the plastics mouldings being deflashed.

According to the present invention there is provided an apparatus for removing flash from mouldings, which apparatus comprises means for embrittling flash on said moulding and at least one brush rotatable in use to remove embrittled flash from said moulding, characterized in that said apparatus also comprises a pair of conveyor belts, which, in use, are disposed to opposite sides of the said mouldings and can convey said mouldings past said brush and at least one of which conveyor belts is so made that, in use, the bristles of said brush can penetrate said conveyor belt and remove flash from said mouldings.

Conveniently, the conveyor comprises a plurality of endless loops of wire which are spaced apart from one another. The conveyor could, however, simply comprise a band of material provided with longitudinally extending slots.

Preferably, at least one brush is disposed to each side of said pair of conveyor belts and each conveyor belt is so made that, in use, the bristles of each brush can penetrate its respective conveyor belt and remove flash from said mouldings.

The pair of conveyors may be arranged to move at the same speed past the brush(es), however, it is also possible to arrange for one of the conveyors to move slightly faster than the other so that the position of the mouldings with respect to the brush(es) changes as the mouldings pass the brush(es).

Cooling of the mouldings could be achieved by a mechanical refrigerator although use of a cryogenic fluid, for example, liquid carbon dioxide or liquid nitrogen is preferred because of the greater rate at which heat transfer can be achieved.

4

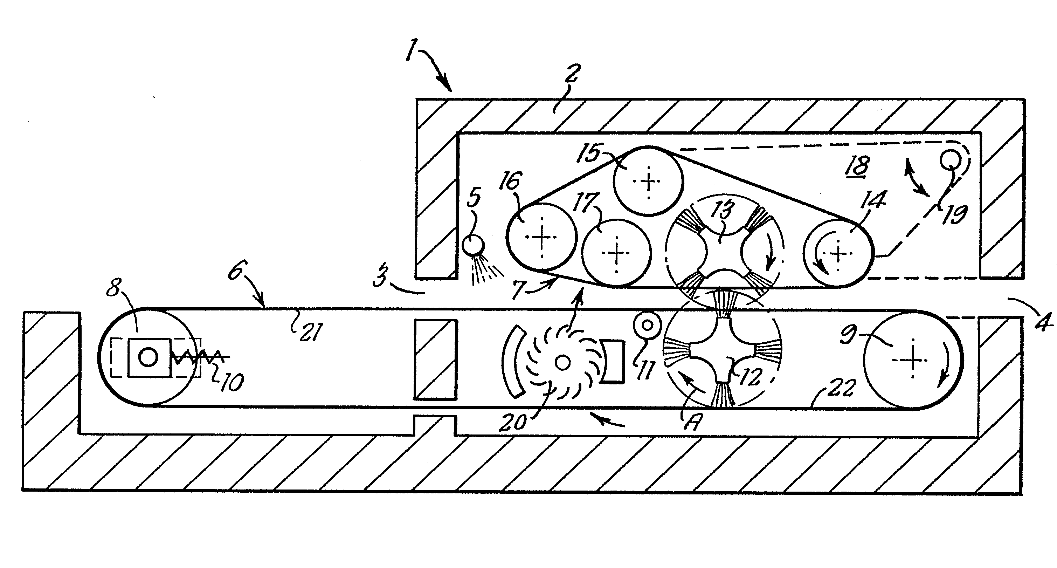

For a better understanding of the present invention and to show how the same may be carried into effect, reference will now be made, by way of example, to the accompanying drawing which is a schematic vertical cross-section through an apparatus in accordance with the invention.

Referring to the drawing, there is shown an apparatus for removing flash from plastic mouldings which are used to secure windows in automobiles. The apparatus, which is generally identified by reference numeral 1, comprises a housing 2 having an inlet 3 and an outlet 4. A spray bar 5 connected to a source of liquid nitrogen (not shown) is mounted on the inside of the housing 2 adjacent the inlet 3 through which passes the lower conveyor belt 6 of a pair of conveyor belts 6 and 7. The lower conveyor belt 6 extends between a drive wheel 8 and an idler wheel 9 and is maintained in tension by a spring 10 acting on drive wheel 8 as shown. The lower conveyor belt 6 comprises 30 endless loops of stainless steel wire which are maintained apart from one another by grooves in drive wheel 8 and idler wheel 9. The lower conveyor belt 6 is also supported by guide roller 11 adjacent the lower brush 12 of a pair of brushes 12 and 13. The brush 12 is rotatable in the direction of arrow A by a variable speed drive (not shown). It will be noted that the bristles of lower brush 12 extend through the lower conveyor belt 6 intermediate the endless loops of stainless steel wire.

The upper conveyor belt 7 is of similar construction to the lower conveyor belt 6 and passes around drive wheel 14, idler wheels 15 and 16 and tensioning wheel 17 all of which are journalled in a frame 18 pivotally mounted on bearings 19 attached to housing 1. The upper brush 13 is also pivotally mounted in the frame 18.

In use, the conveyor belts 6 and 7 are first set in motion by rotating drive wheels 8 and 14. Each drive wheel 8 and 14 is connected to a separate variable speed motor which are arranged so that the lower conveyor belt 6 moves very slightly faster than the upper conveyor belt 7. The brushes 12 and 13 are then set in rotation both rotating clockwise as viewed in the figure. A stop, not shown, is provided to maintain a certain minimum distance between the upper and lower conveyor belt 6 and 7.

Once the conveyor belts 6 and 7 and brushes 12 and 13 are operational liquid nitrogen is admitted to the housing 2 through spray bar 5 and a fan 20 is actuated to circulate cold nitrogen vapour around the housing 1.

Once the housing 2 is cooled to the desired temperature the plastics mouldings to be deflashed are placed on the upper reach 21 of the lower conveyor belt 6. As they enter the housing 2 through inlet 3 they are chilled and the thin flash becomes embrittled. The plastics mouldings are then gripped between the upper and lower conveyor belts 6 and 7 and transported between the rotating brushes 12 and 13. The bristles on the brushes 12 and 13 penetrate deep into the moulding and remove the embrittled flash. Furthermore, the small difference in speed between the conveyor belts 6 and 7 tends to roll the plastic mouldings thereby exposing flash to the bristles at a multiplicity of angles. Removed flash drops through the upper reach 21 of the lower conveyor belt 6 and collects on the floor of the housing 2. Any flash which becomes lodged on the top of the lower reach 22 of the lower conveyor belt 6 is removed by the bristles on brush 12.

The deflashed plastic mouldings leave the housing 2 through outlet 4.

Whilst the apparatus described with reference to the drawing was developed specifically for deflashing plastic mouldings which are to be used to secure windows in automobiles it is also capable of deflashing other articles which have flash which can be embrittled, for example zinc diecastings.

## CLAIMS

1.    An apparatus for removing flash from mouldings which apparatus comprises means for embrittling flash on said mouldings and at least one brush rotatable in use to remove embrittled flash from said mouldings, characterized in that said apparatus (1) comprises a pair of conveyor belts (6, 7) which, in use, are disposed to opposite sides of said mouldings and convey said mouldings past said brushes (12) and at least one (6) of which conveyor belts (6, 7) is so made that, in use, the bristles of said brush (12) can penetrate said conveyor belt (6) and remove flash from said mouldings.

2.    An apparatus according to Claim 1, characterized in that said conveyor belt (6) comprises a plurality of endless loops of wire which are spaced apart from one another.

3.    An apparatus according to Claim 1 or 2, characterized in that at least one brush (12, 13) is disposed to each side of said pair of conveyor belts (6, 7) and each conveyor belt (6, 7) is so made that, in use, the bristles of each said brush can penetrate its respective conveyor belt (6, 7) and remove flash from said mouldings.

4.    An apparatus according to any preceding Claim, characterized in that means are provided to drive one conveyor belt slightly faster than the other so that the position of the mouldings with respect to the brush(es) changes as the mouldings pass the brush(es).

5.    An apparatus according to any preceding Claim, characterized in that said means for embrittling said flash comprises a spray bar (5) connectable to a source of liquid nitrogen.

END

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | DE - A - 2 742 704 (SKB TKHM) <br> * Totality * <br> -- | 1,5 | B 29 H · 3/03 |
| A | GB - A - 916 158 (BENDIX CORPORA-TION) <br> * Totality * <br> -- | 1,15 | |
| A | DE - A - 1 729 704 (THE PANGBORN CORPORATION) <br> * Totality * <br> ---- | 5 | |

TECHNICAL FIELDS
SEARCHED (Int. Cl. 3)

B 29 C 17/00
B 29 H 3/06

The present search report has been drawn up for all claims

| Place of search | Date of completion of the search | Examiner |
|---|---|---|
| VIENNA | 08-11-1982 | MAYER |